Europäisches Patentamt

European Patent Office

Office européen des brevets

(19)

(11) Publication number: 0 123 225
A1

## (12) EUROPEAN PATENT APPLICATION

(21) Application number: 84104139.5

(22) Date of filing: 12.04.84

(51) Int. Cl.³: B 29 D 3/02

(30) Priority: 20.04.83 US 486725

(43) Date of publication of application:
31.10.84 Bulletin 84/44

(84) Designated Contracting States:
DE FR GB IT SE

(71) Applicant: Deutsche ITT Industries GmbH
Hans-Bunte-Strasse 19 Postfach 840
D-7800 Freiburg(DE)

(84) Designated Contracting States:
DE

(71) Applicant: ITT INDUSTRIES INC.
320 Park Avenue
New York, NY 10022(US)

(84) Designated Contracting States:
FR GB IT SE

(72) Inventor: Browning, James Ernest
Route 1, Box 15
Adel Georgia 31620(US)

(72) Inventor: Chamberlin, James Lewis
36110 Congress
Farmington Hills Michigan 48018(US)

(74) Representative: Grau, Ulf
c/o ALFRED TEVES GMBH Guerickestrasse7
D-6000 Frankfurt (M) 90(DE)

(54) Composite structure machine and method.

(57) Subjects of the invention are a machine and method, and the product of the method, for making high-strength composite structures of thermosetting or thermoplastic resin with reinforcements therein. A continuous longitudinally extending wet charge of resin and reinforcement is formed as an endless source and maintained under a given tension while it is advanced toward a mold cavity. A plurality of reinforcement elements are continuously placed at predetermined positions within the cross-sectional area of the wet charge and with the longitudinal reinforcements being continuously parallel to one another. The resin and the reinforcements form a composite matrix whose angular reinforcement orientation may vary ± 90° with respect to the longitudinal axis of the wet charge and the ultimate product. The reinforcements also may change directions or orientations at different levels within the cross section area. The composite matrix is advanced into the mold cavity where it is compression molded and cured within a heated tool under low pressure without flowing of the matrix.

EP 0 123 225 A1

./...

FIG.4

COMPOSITE STRUCTURE MACHINE AND METHOD

Background Of The Invention:

This invention relates to composite reinforced polymeric or plastic structures and, more particularly, to such structures utilizing a resin having reinforcements selectively placed therein.

Composite components utilizing a thermosetting resin having reinforcements therein are known and have been widely used in the art. These components find particular utility in the automotive industry because of their light-weight and high-strength structural characteristics. The composite structures generally comprise a thermosetting resin with reinforcements of glass fibers or glass filaments and the like. The reinforcements may take the form of a chopped glass fiber or continuous glass filaments or a bundle of filaments forming a so-called roving, or the like. The reinforcements may also take the form of a woven cloth, a tape which is pre-impregnated with a partially or semi-cured flowable thermosetting resin, a fiber mat or sheet molding compound (SMC), or the like. The resins commonly used are polyester, vinylester, epoxy and polymides. These members are then placed together to form a specific composite matrix structure utilizing the resin to hold the reinforcement materials in selected positions within the matrix.

In the prior art, however, the need for specific structural properties at high stress points of the composite structure necessitated the use of the reinforcement member throughout the composite structure. As a result, the composite structures were over-designed in non-critical portions of the overall structure. This was due to the homogeneous nature of the re-forcement materials of the prior art wherein the required geometric configuration at a high stress point dictated the characteristics of the reinforcement material at the less critical portions of the device.

This problem was overcome by the use of a base layer having the required minimal structural properties in the overall device and by selectively placing localized reinforcements at anticipated critical locations of the composite device. That is, the selected reinforcement material provided the desired physical properties for the critical areas and took the form of materials such as SMC. This technique varied the properties of the composite device by orienting layer over layer with the base layer being the minimal structural property required. From the base point the structure was built up in layers with different structural properties achieved by utilizing two or a greater number of layers disposed in many different configurations. This method has worked well and has received widespread acceptance in the art. However, this selective reinforcement technique presents several problems particularly with respect to high-volume production.

One of the most significant problems presented by the selective reinforcement process is that it normally requires manual operation or hand lay-up and therefore requires significantly greater processing time relative to an automated process. Another problem is the high pressure that must be utilized in order to liquefy the partially or semi-cured resin in reinforcement materials such as SMC. This necessitates tooling and presses of relatively higher cost. Further, due to the high pressure requirement, long curing times must be utilized relative to the curing times required in low-pressure processes. Since these prior art techniques normally require manual operation, or hand lay-up, to position the semi-cured materials into the mold cavity they therefore are significantly operator-sensitive. Moreover, it has been found that the selective placement process fails to consistently provide void-free, good-adhesion properties between the layers. Further, since one of the layers must move relative to the other layers in the mold cavity, proper placement of the reinforcement has been difficult to assure and consistent bonding of the layers has not been achieved.

Another problem of the selective layer technique has been the inability to maintain proper tension on the continuous reinforcement as it is placed in the mold cavity which results in non-parallel reinforcement fibers or fibers with an undesired curvature. This further results in abnormal or undesired structural properties. This undesired non-parallel placement also permits resin-rich areas and resin-void areas due to the high-pressures that are utilized to flow the fibers and resin into their final placement positions. Further, the failure to provide proper tension adversely effects the structural strength of the finished part.

These and other disadvantages are overcome by the present invention wherein there is provided a composite structural member, and a method and a machine for making same, in which the reinforcements are positioned and contained throughout the charging stage and the molding and curing stages. The compression molding is accomplished with relatively low pressures. The desired plysical properties are achieved through the control of the precise quantities and placement of each individual reinforcement at any desired point within the composite matrix. The reinforcements can be accurately controlled so as to change directions or orientation within different cross-sectional areas of the composite part. While compression flowing of the resin in the matrix may occur to a limited extent, the invention does not rely upon flowing of the matrix to disperse the reinforcements. The positioning of the reinforcements is precisely controlled to coincide with the desired location once the wet charge has completely cured.

Summary Of The Invention:

Briefly, a method and a machine are provided for producing high-strength composite structures of thermosetting or thermoplastic resin with reinforcements therein. An initial wet charge of resin and reinforcements such as fiberglass rovings is provided as a continuous source which is pre-tensioned and advanced through the machine. A plurality of reinforcements are then placed in the tensioned charge at predetermined positions within the cross-sectional area thereof. A composite matrix is thereby formed wherein continuous longitudinal rovings of predetermined location can be placed in combination with reinforcements of an angular orientation which can vary in the range of $0° \pm 90°$ to the length direction. A mold cavity having a given cross-sectional area and extending a given length is provided and the given area may vary along the length. The composite matrix is advanced into and compression molded in the mold cavity and the composite matrix is cured while being maintained under a predetermined tension. The cured product is severed from the continuous source and ejected from the machine.

Brief Description Of The Drawing:

The advantages of this invention will become more readily appreciated as the same becomes completely understood by reference to the following detailed description when taken in conjunction with the accompanying drawing wherein:

Figure 1 is a plan view of an automobile bumper member constructed in accordance with the principles of the present invention;

Figure 2 is a cross-sectional end view of the member of Figure 1 taken along the line 2--2;

Figure 3 is a top view of the bumper member of Figure 1;

Figure 4 is a plan view of a representative machine including a mold cavity and press assembly for producing composite structures in accordance with the present invention;

Figure 4a and 4b are cross-sectional views of the composite materials traversing the carding plates and Figure 4c is a cross-sectional view of the wet charge traversing squeeze-out bushings immediately after the resin bath;

Figure 5a is an elevational view of one of the biaxial rotary reinforcement applicators depicted in Figure 4 as seen looking down the common longitudinal axis of the machine and composite matrix;

Figure 5b is a side view of the applicator of Figure 5a;

Figure 6 is a diagrammatic representation of a composite structure member illustrating applications of the principles of the invention relative to the utilization of different types of reinforcements in a single workpiece;

Figures 7 and 8 are diagrammatic plan and top views of the machine of Figure 4;

Figure 9 is a timing sequence chart which illustrates the operational steps of the machine; and,

Figures 10, 11 and 12a and 12b are plan, side and cross-sectional views which illustrate an alternative composite structure member in accordance with the principles of the present invention.

Detailed Description:

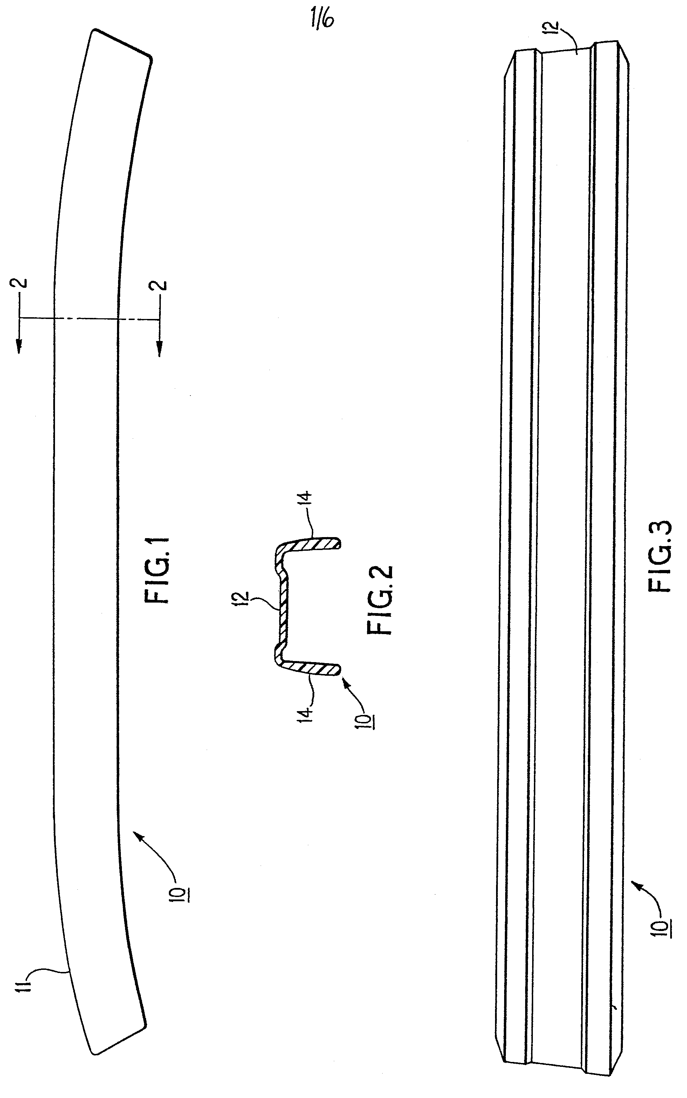

Referring now to Figure 1, there is shown generally at 10 a composite structure in the form of an automotive bumper

0123225

member constructed in accordance with the teachings of the present invention. Structure 10 is illustrated in the form of a curved automotive bumper member having curved end portions 11 and which is of a generally U-shaped cross-section as illustrated in Figure 2. The forward surface of bumper structure 10 includes a depression 12, as best illustrated in Figure 2 and 3, and further includes a tapered or varying cross section in the legs 14 of the generally U-shaped cross section. As will be described more fully hereinafter, the cross section may incorporate a composite matrix of reinforcements utilizing glass, carbon, and steel fibers in combination with woven fibers, metal stampings and any other compatible reinforcement which is held in place by a resin system capable of bonding these materials into a uniform composite material composed of up to 85% reinforcement and 15% resin system by weight. In accordance with the present invention, each reinforcement is precisely placed and may comprise a fiber from the size of a filament of glass to a group of filaments comprising a roving and on through the use of woven cloth materials and the use of chopped and continuous strand mats. Further, the form of structure 10 is not limited to a constant cross-sectional configuration and, in accordance with the present invention, the cross-sectional configuration advantageously can be varied at any point along the longitudinal axis of bumper structure 10. That is, while the volume of any cross-sectional portion remains constant, the cross section may vary to accomodate a given structural requirement. For example, the cross section of a given structure or part may vary from a round to a square configuration provided that the cross-sectional volume remains the same.

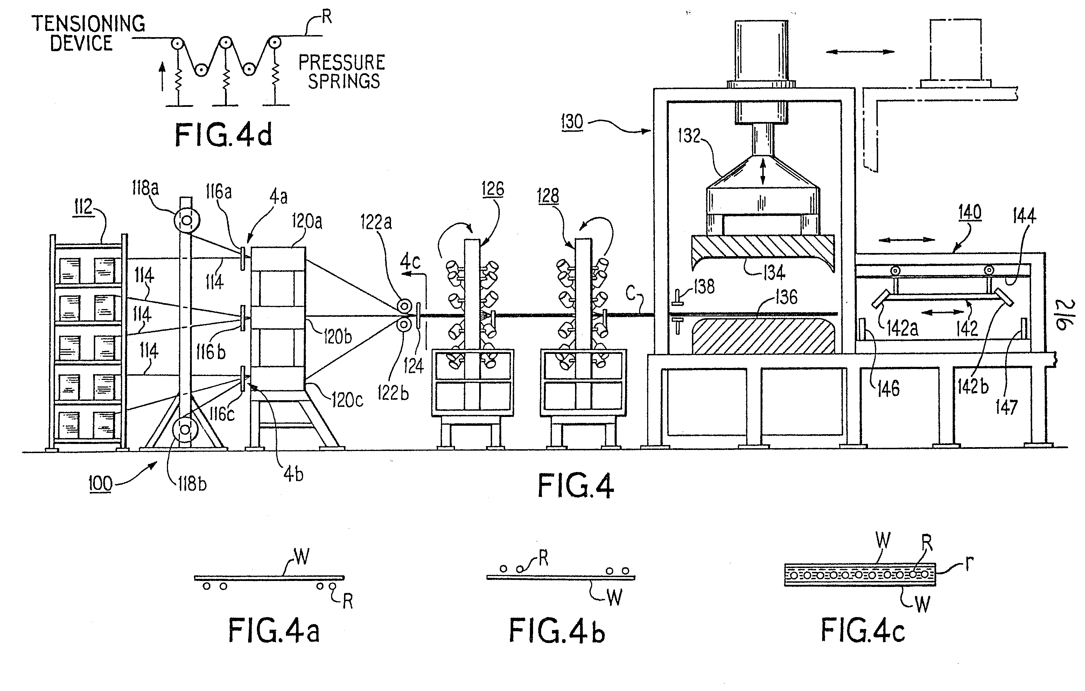

Referring now to Figure 4 there is shown a machine 100 for making high-strength composite structures in accordance with the principles of the present invention. Machine 100 includes an endless source of reinforcement materials illustrated in the form of fiberglass rovings. Source 112 takes the form of a creel of fiberglass doffs provided on and in a suitable rack. In currently preferred practice, source 112 includes seven separate racks having five shelves in each rack. Each of the thirty-five shelves is provided with twelve separate doffs. Accordingly, 420 separate fiberglass rovings are provided by source 112. In one constructed embodiment, the rovings were Owens Corning Fiberglass type 30, 113 yield and 225 yield.

The leading ends of each of rovings 114 are received in and guided through carding plates 116a, 116b and 116c. The carding plates may take the form of a plate or disk having a plurality of apertures or through holes therein. The apertures are provided in a predetermined pattern so that the emerging rovings take on a predetermined cross-sectional configuration. Two rolls of carrier stock 118a and 118b in the form of woven cloth mats or tape of a given width are illustrated in this embodiment by way of example. The carrier stock itself is a reinforcement material which forms an element of the composite matrix and, if necessary, also functions as a belt or support for the rovings as they advance through machine 100. That is, the geometry of the ultimate part or product--and therefore the cross-sectional configuration of the composite matrix charge--may necessitate the use of a suitable carrier stock for transporting the charge during the charge preparation. The ends of the woven cloth or tape are placed onto the adjacent rovings through or immediately after the adjacent carding plate. The rovings are then fed through resin baths 120a, 120b and 120c. The resin baths function to impregnate each group of rovings and carrier stock to form a wet charge of composite materials comprising wet resin and fiberglass reinforcements. In one constructed embodiment, the resin was Owens Corning Fiberglass type E987-2 which is a low-shrink polyester resin.

In currently preferred practice the rovings are placed under tension after they emerge from the carding plates. This is done by routing and looping the rovings into and out from an S-shaped path through a pair of spring-loaded pulleys prior to the resin baths. As described more fully hereinafter, it has been found that selecting or adjusting the spring constant of the tensioning device to provide .907kg (2 lbs)of tension in each roving provides good results.

Figure 4a and 4b provide cross-sectional views looking into the longitudinal axis of the reinforcement materials, including woven mats W, emerging from carding plates 116a and 116c, respectively. For clarity, only a limited number of rovings R or roving bundles are shown. The impregnated rovings are then guided through rollers 122a and 122b and into a final carding plate 124 which is similar to carding plates 116a--c and which may include squeeze-out bushings to accomodate the wet charge. Figure 4c is a view of the composite matrix, including wet resin r, seen looking into the longitudinal axis of the charge traversing carding plate 124. Carding plate 124 may be provided in a predetermined shape and cross-sectional configuration over which fibers or reinforcements are wrapped. Further, a mandrel can be used at this stage so that the charge, and the ultimate finished product, is formed of a hollow configuration.

The charge at the output of carding plate 124 is then advanced through a pair of biaxial reinforcement applicators 126 and 128. Each biaxial applicator includes a rotary member coaxial with the longitudinal axis of the composite matrix charge and the rotary members are mounted for rotation in respectively opposite directions. As will be described more fully hereinafter, each applicator includes a source of reinforcements thereon and a central opening therein for receiving the composite matrix charge. As the composite matrix charge advances through applicators 126 and 128, each applicator is rotated at a given rate so as to wrap its reinforcements around the longitudinally extending rovings of the composite matrix. This results in an additive reinforcement pattern having an angular orientation in the length direction of the composite matrix charge which can vary in the range of 0° to ± 90° (i.e., biaxially) depending upon the speed of rotation of the applicators and the speed of the composite charge advancing through the applicators.

By using a pair of biaxial rotary applicators, which wrap in respectively opposite directions, a symmetrical or balanced charge is provided wherein any stresses introduced into the charge by one applicator are offset and balanced-out by the other. It should also be noted that the wrapping is accomplished without the use of a conventional mandrel. That is, the longitudinally extending and tensioned rovings of the composite matrix charge provide the function of a mandrel. Of course, there are certain applications and products where a conventional mandrel could be used such as for a hollow structure or a tube. On the other hand, a suitable core such as a foam core also can be utilized in those applications. It should also be appreciated that the present invention can be practiced without the use of rotary applicators. That is, it is contemplated that many products will not require a charge and reinforcement pattern of the type provided by the rotary applicator.

The output of applicators 126 and 128 provide a composite charge C wherein the composite matrix is setup and ready for compression molding. The charge C is then advanced into a compression molding press 130. Press 130 includes a reciprocating ram 132 which is mechanically fixed to a movable upper female die 134. A lower male die 136, which can be fixed or movable is suitably fastened to the frame of press 130. Press 130 further includes a clamping device 138 which is utilized to clamp and tension charge C when the dies are closed to compression mold and form the final part.

Machine 100 further includes a clamping, cutoff and ejection station 140 which includes a clamping device 142 which is movably mounted on a stationary rack 144. Clamping device 142 includes a pair of movable clamps 142a and 142b which are adapted to clamp and hold the cured finished product once dies 134 and 136 are opened following a compression molding operation. Clamping device 142 also functions to provide proper tensioning during the molding operation. When the dies are opened, clamping device 142 is advanced over male die 136 to clamp and then remove the cured part and to sever the cured part from the balance of charge C by means of a pair of cutters 146 and 147. In one constructed embodiment a small amount of offal was provided between each cured part and the balance of the charge. As each part advanced through the machine the pair of cutters severed and removed the offal from each end of, and properly sized, the finished part. The dies 134 and 136 of press 130 include conventional heating means (not shown) which facilitate curing of the charge C.

As will be explained more fully hereinafter, press 130 and station 140 are movably mounted on a track from a first position adjacent applicator 128 to a second position spaced apart from applicator 128. This movement is provided, in part, to advance charge C when the dies are closed and the part is curing within the press. That is, when the dies are opened press 130 is initially moved and positioned adjacent applicator 128 and over the stationary wet charge. Once the dies close, and the curing operation begins, the press is moved away from applicator 128 so as to pull and advance a new wet charge C into position for the next molding operation. Further, while the press is moving and before the dies close, clamping device 138 closes and clamps onto charge C under a predetermined pressure which allows charge C to slip through the clamp when the tension on charge C exceeds .907kg (two pounds). Clamping device 142 maintains the tension on the other side of the dies. This is done to maintain the predetermined tension on the longitudinally extending rovings in charge C during the compression molding operation. This then precisely maintains the reinforcements in their intended positions within the mold cavity. The dies are also programed to close slowly just before they meet. This is done to allow trapped air and excess resin to escape thereby assuring a void-free finished part with proper resin distribution.

It should also be appreciated that charge C can be provided in various cross-sectional configurations and is not limited to the generally rectangular configuration illustrated in Figure 4c. For example, a plate-die can be provided before or after clamping device 138 to provide an extruded-type cross section which is pulled through the plate-die. The shape of the plate-die, and therefore the cross section of the resulting charge, can take a generally U-shaped, L-shaped or any one of a number of desired configurations.

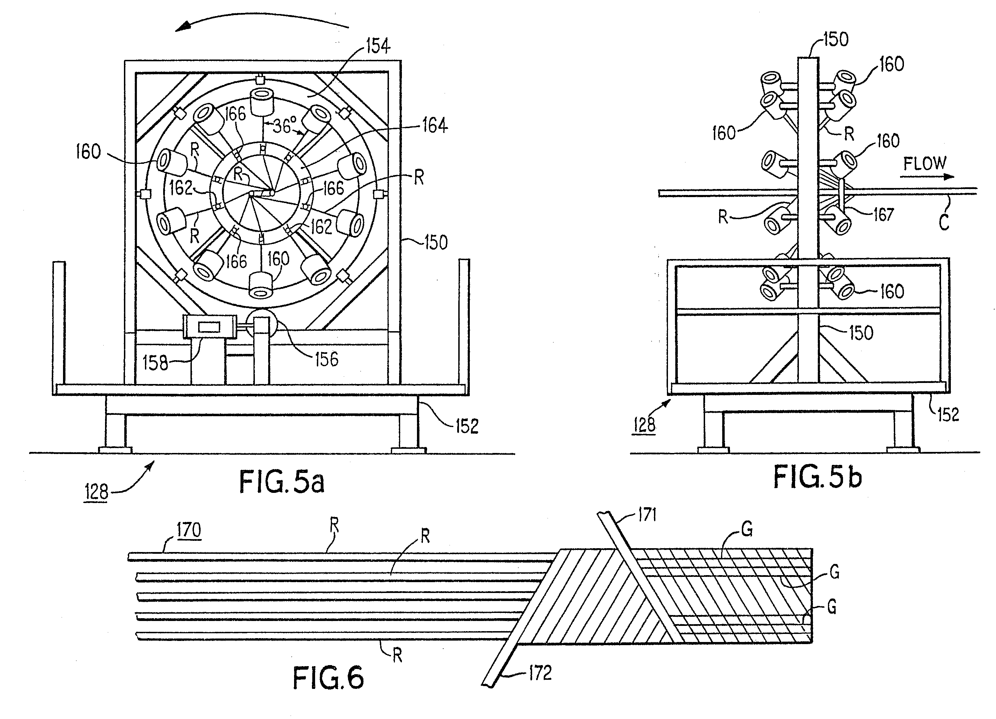

Referring now to Figures 5a and 5b there are shown elevation and side views of biaxial rotary applicator 128. It can be seen that applicator 128 includes a frame 150 which is mounted to a suitable base 152. Disposed within frame 150 is a floating drive ring 154 which is rotably mounted and driven by the rubber drive wheel 156 of a motor 158 which is in contact with the radially outer surface of drive ring 154. In currently preferred practice, drive ring 154 is provided with ten doff holders 160 equally spaced 36° apart on each side of drive ring 154 or a total of twenty doffs. Each doff holder provides a source of reinforcement or fiberglass rovings R which are paid-out from a doff and are guided radially inwardly through radially extending bore holes 162 of an inner delivery ring 164. The delivery ring includes ten transverse set screws 166 on each side of delivery ring 164 which are adjusted to provide a drag or predetermined tension to each roving R as it is pulled and advanced through delivery ring 164 toward the wet charge extending along the axis of applicator 128. In currently preferred practice, the set screws are adjusted to provide 0.907 kg of tension in each roving. It can be seen that applicator 128 is adapted for counter-clockwise rotation as viewed in Figure 5a. Accordingly, each of the twenty rovings R are wound or wrapped around the rovings or roving bundles of the wet charge in a counter-clockwise direction. As illustrated in Figure 5b, applicator 128 includes a generally elliptically-shaped wrap control hoop 167 on the downstream side of applicator 128. Hoop 167 functions as a run out control so that rovings R make contact with and are wrapped about the wet charge in an area relatively close to applicator 128. It should now be appreciated that applicators 126 and 128 function to wrap or wind reinforcement materials around the wet roving bundles and in a pattern determined by the speed of the advancing charge C and the rotational speed of applicators 126 and 128. Further, it should also be appreciated that the winding or wrapping is accomplished without the use of a mandrel as is used in the prior art. Again, however, a mandrel can be employed in conjunction with the present invention to facilitate certain structures such as hollow structures.

Referring now to Figure 6 there is shown at 170 a diagrammatic representation of a charge of composite reinforcement materials. For clarity, only five rovings, or five roving bundles, are illustrated. Prior to the wrapping or winding operation, the rovings extend along a longitudinal axis. A first reinforcement material 171 as illustrated in the form of a roving but which could comprise a woven cloth or tape. A second reinforcement material 172 is also illustrated in the form of a roving but which also could comprise a woven cloth or a reinforcement tape. Reinforcement 171 is applied by a first applicator and the angular orientation of reinforcement material 171, with respect to the longitudinal axis of the rovings R, can vary between 0° and ± 90° as a function of the rotational speed of the applicator and the speed of the moving rovings R. Similarly, reinforcement 172 is applied by a second applicator and the orientation of reinforcement 172 can vary between 0° and 90° as a function of the same parameters. Figure 6 further illustrates additional reinforcement materials G which may take the form of graphite filaments or any other suitable reinforcement materials. Reinforcements G are illustrated to demonstrate the capability of the process to selectively place reinforcement material at any point in the composite matrix. For example, graphite filaments G can be provided at the location of the composite matrix illustrated in Figure 6 so as to provide additional reinforcement for the leg portions 14 of the generally U-shaped bumper cross section illustrated in Figure 2. The selective placement capability also applies to the angular placement. By way of example, the angularity of the windings can be varied within a given charge such that a 45° angle can be maintained for 12" then 10° for 12" and then 45° again for final 12". This, then, functions to selectively strengthen certain areas of the product such as a bumper.

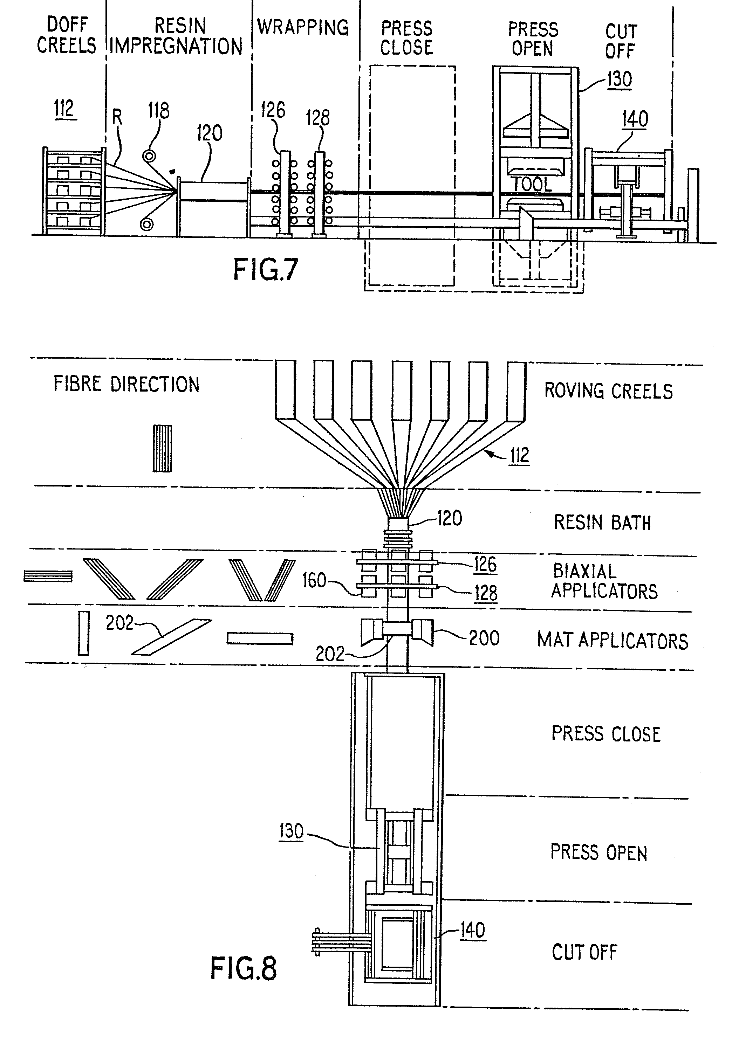

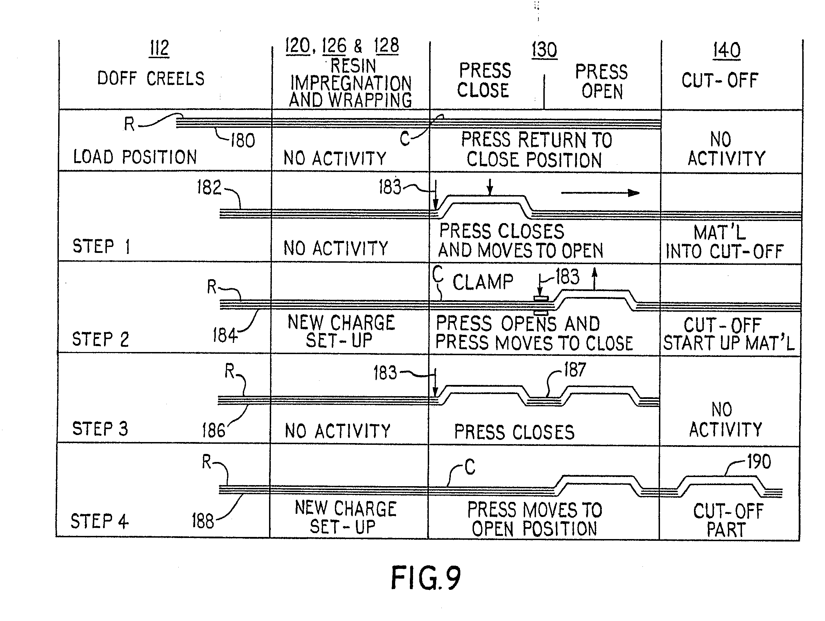

Referring now to Figures 7 and 8 there is shown diagrammatic plan and top views of machine 100 of the Figure 4. Figure 9 provides a simplified timing sequence chart useful in explaining the operational steps of the machine diagrammatically illustrated in Figure 7 and 8. In the initial LOAD POSITION, line 180 in Figure 9 represents the initial rovings R which are established and set up into a completed composite matrix charge C at the output of applicator 128. The completed charge C extends into and across the press positions. At this point, press 130 is moved into its PRESS CLOSE position above and below charge C in preparation for Step 1. Line 182 illustrates the operation of the machine during Step 1. It can be seen that the dies are closed over the completed charge C--while clamp 138 illustrated by arrow 183 in Figure 9 maintains tension on the rovings--to compression mold and form the completed part. In Step 2, press 130 is advanced to its PRESS OPEN position during the curing time of the charge and while the press and toll are still closed. This then functions to advance charge C as illustrated in line 184 of Figure 9. The press then opens and traverses back to the PRESS CLOSE position leaving the formed charge in its new position. In Step 3, and with press 130 now in its PRESS CLOSE position, the press again closes to form the next completed part. As illustrated in line 186 of Figure 9 two cured and completed parts are now centrally joined as at 187. In Step 4, and as illustrated by line 188, the press again moves to its open position at which time the first completed part 190 is cut and severed from the balance or upstream portion of charge C.

Figure 8 illustrates an additional wrapping or winding operation which can be added to the machine in accordance with the principles of the present invention. That is, Figure 8 further illustrates a mat applicator 200 which is similar to applicators 126 and 128 previously described but is specifically adapted for the application of a wider mat material 202. Again, the rotational speed and longitudinal motion of charge C determine the angular orientation of the applied mats 202.

As previously described, machine 100 further includes a controlled or programed movement to maintain a predetermined tension on the generally longitudinally extending rovings in the wet charge during the compression molding operation. This is particularly significant with respect to longitudinally curved or contoured workpieces. Otherwise, tension on the reinforcement fibers along the shorter radii of the curved configuration would build up and increase and thereby squeeze out the surrounding resin resulting in a part having undesirable resin-void and resin-rich areas. In accordance with the present invention, clamping devices 138 and 142 in Figure 4 in conjunction with the controlled movement of machine 100 provide the tensioning function as follows: Station 140 is mounted to press 130 for movement therewith along a track and between the PRESS OPEN and PRESS CLOSE position. Clamping device 142 is further independently mounted for movement toward and away from press 130. As the press dies are being closed over the wet charge, the press itself is moving into the PRESS CLOSE position. During this movement, clamping device 138 is closed to clamp the wet charge, which extends upstream of the dies, under a predetermined pressure. This predetermined pressure allows the wet charge, or any of the individual rovings therein, to slip toward the dies when the tension on the charge, or any of the individual rovings therein, exceeds 0.907 kg (two pounds). This controlled slippage of one or more rovings can translate all the way back or upstream to the doffs at source 112. Thus, as the dies close, the induced tension on the reinforcements therein cannot exceed 0.907 kg and this ensures that the proper tension and placement of the reinforcements are maintained. Simultaneously, the clamping device 142 of station 140 is closed on the wet charge which extends downstream of the dies and the relative movement of clamping device 142, with respect to the movement of press 130 and station 140 therewith, is precisely controlled so as to maintain the predetermined tension on the reinforcements in the closing dies.

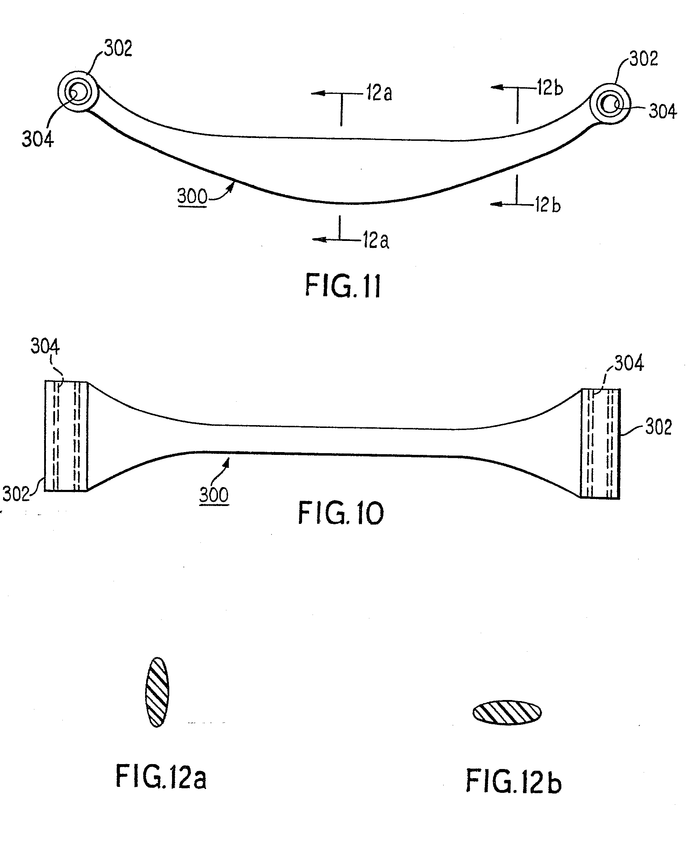

Referring now to Figures 10, 11 and 12a and 12b there are shown plan, side and cross-sectional views which illustrate an alternative composite structure which is made in accordance with the teachings of the present invention. The structure shown takes the form of a composite spring 300 which provides the function and strength of a conventional steel leaf spring in automotive applications. The end mounting flange areas 302 are provided with an inset steel wear ring 304. Otherwise, the entire spring is made of composite materials comprising reinforcements and resin in accordance with the principles of the present invention. It can be seen that the cross-sectional shape of spring 300 varies in its longitudinal direction. However, each composite section is of equal volume in all areas except the end mounting flange areas. The fiber orientation in the main body of spring 300 is 100% longitudinal and, of course, it can be any other desired orientation. The end mounting flange areas are provided by building up the material at those locations using the rotational wrapping and winding system in accordance with certain features of the present invention. The material is wrapped around wear rings 304 which are placed in the wet charge. The fiber orientation in the end mounting flange areas is 40%-45° diagonal. Spring 300 is merely illustrative of the many types of products which can be made in accordance with the present invention. Further examples are door frames, radiator supports, frame rails, seat frames, suspension components and the like. Other examples are hollow constructions such as tubing, telephone pole arms, closed or box bumpers and the like.

As previously alluded to, and in currently preferred practice, the compression mold press preferably includes heating means to facilitate the curing process. Means are provided in the dies to heat that structure to approximately $150^{o}C$ during the curing process. The temperature is variable and is varied to meet the specific requirements of a given resin chemistry. While a resin formulation having a suitable catalyst can be provided so as to perform the curing operation at room temperature, such resins have a so-called "pot life" which is relatively short. That is, since the liquid state lifetime of the resin is relatively short, it will set up (cure) at room temperature in the resin bath and in a relatively short period which typically is measured in hours or less. By utilizing a heated mold and standard resins as previously described herein, it has been found that the pot life of the resins used is on the order of several days.

It will be appreciated by those skilled in the art that the process in accordance with the present invention utilizes a relatively low-pressure molding technique as compared to prior art processes such as SMC. For example, in one constructed embodiment the press was a 25 ton press which utilized a steel press weighing 2,268 kg (5,000 lbs). Comparable press tonage for an SMC process in on the order of 200-300 tons and such presses typically utilize a press weighing 9,072 kg (20,000 pounds) and which is made of aluminum so as to minimize its weight. Further, in one constructed embodiment, the curing time of the process in accordance with the present invention was on the order of 1 minute-45 seconds and it is anticipated that most structures in thicknesses up to2.54 mm (1 inch) can be cured in the range of 30 secs. to 3 minutes. Again, in accordance with the present invention, these desirable characteristics follow from the elimination of the need for flowable semi-cured resins and the elimination of the need to compress the composite materials to liquefy and flow them as is the case with an SMC-type process.

In this regard, the SMC and related prior art techniques utilize a maturated composite material which is cured to the touch and placed in the mold in that state. Accordingly, the subsequent compression molding operation must liquefy the maturated materials in order to permit flowing to establish the composite matrix. As is known in the art, the composite materials utilized in an SMC-type process are worked in the so-called "C stage." While the materials in this state are deformable they are also dimensionally stable and, therefore, tremendous heat and pressure must be applied to cause the materials to flow in the subsequent compression molding operation. A composite material or resin in the so-called "A stage" is a set up charge which has been "wetted out" and is in a full liquid state. The so-called "B stage" applies to an impregnated resin wherein an internal chemical reaction has begun leading to maturation. It will be appreciated by those skilled in the art that the composite structure process in accordance with the present invention works the composite materials between the A and B stages at the very beginning of stage B, and the materials are then compression molded at very low pressures. Again, the need to liquefy

and flow the charge of the SMC process necessitates the relatively high compression molding pressures. Further, in a typical SMC process the charge is not the same size as the mold cavity and is placed so as to flow into other areas of the mold cavity. In contrast thereto, the charge utilized in the present invention preferably is the same size as the compression molding cavity and is precisely placed therein. However, the tool edges can be and often are designed to automatically edge-trim as the tool closes.

It will be appreciated by those skilled in the art that the present invention provides distinct advantages over prior art techniques other than SMC. For example, bumpers have been made using a "pre-preg" wet compression molding technique with hand lay-up of fully "wetted out" layers of fiberglass. The layers are hand-placed in a die and in a staggered or stepped configuration corresponding to the desired shape and cross-sectional configuration of the finished part. High pressure is then applied on a heated tool to cure the part. However, the hand lay up is operator sensitive and does not provide the production volumes of an automated system.

It also will be appreciated by those skilled in the art, that the materials utilized to carry out the method of the present invention can be both thermosetting and thermoplastic materials. Further, these materials can be combined in the same mold to provide a given part. For example, a base layer of thermosetting material can be bonded to a decorative layer of thermoplastic material in the mold cavity. It also has been found that the mold cavity can be suitably coated so as to provide in-mold coloring of the finished workpiece. It further has been found that the mold cavity can be suitably coated to provide a superior "Class A" finish such as by utilizing a polyester resin or jell coating, for both color and a better finish. This is typically done in conjunction with the application of a "surfacing veil" dispensed at 118a and 118b in Figure 4. Finally, it is noted that the machine illustrated in Figure 4 is only one of a variety of machines which would be suitable for practicing the present invention and for producing composite structures thereunder.

What has been taught, then, is a machine and method for making high-strength composite structures of cured resin with reinforcements precisely placed therein. The invention facilitates, notably, the provision of a finished part which can be of a curved contour and in which the cross section can vary. The part is not limited to a constant continuous cross section. The part is compression molded using low pressure and the process does not primarily depend on compression flowing of the composite matrix. The forms of the inventions illustrated and described herein are but preferred embodiments of these teachings. They are shown as illustrations of the inventive concepts, however, rather than by way of limitation and it is pointed out that various modifications and alterations may be indulged in within the scope of the appended claims.

What is claimed is:

1. A method for producing high-strength composite structures comprising the steps of:

guiding a plurality of continuous fiberglass rovings through a carding plate;

impregnating the guided rovings with liquid resin;

guiding the impregnated rovings through bushings and into a predetermined cross-sectional configuration;

pulling said rovings through said bushings and into a longitudinally extending direction to provide a predetermined tension in each of said rovings;

applying reinforcement materials around the longitudinally extending rovings in said cross-sectional configuration to form a charge while maintaining said tension;

providing a press having a pair of dies defining a mold cavity of a given cross-sectional area and extending a given length;

closing said pair of press dies on a portion of said charge corresponding to said given length to compress and cure the impregnated and reinforced rovings therein;

opening said pair of press dies; and

severing the cured structure from said charge.

2. The product of the method of Claim 1.

3. The method according to Claim 1, including the step of moving said press from a first position to a second position when said dies are closed to advance said charge into said first position.

4. The method according to Claim 1, wherein said applying step includes the step of rotating a pair of biaxial reinforcement applicators comprising first and second rotary members coaxial with the longitudinal axis of said rovings and adapted for rotation in respectively opposite directions, and each member having a source of reinforcements thereon for rotation therewith.

5. A method for producing a high-strength composite structure comprising the steps of:

guiding a plurality of continuous fiberglass rovings through a carding plate;

impregnating the guided rovings with liquid resin;

guiding the impregnated rovings through bushings and into a charge having a predetermined pattern and cross-sectional configuration corresponding to the cross-section of said composite structure;

pulling said rovings through said bushings and into a longitudinally extending direction to provide a predetermined tension in each of said rovings;

providing a press having a pair of dies defining a mold cavity of a given cross-sectional area and extending a given length;

advancing said charge relative to said press while maintaining said tension;

closing said pair of dies on a portion of said charge corresponding to said given length to compress and cure the impregnated and reinforced rovings therein;

opening said pair of press dies; and

severing the cured structure from said charge.

6. The product of the method of Claim 5.

7. The method according to Claim 5, including the step of wrapping reinforcement materials around the longitudinal axis of said charge.

8. A method for producing a high-strength composite structure of resin with reinforcements therein, said method including steps of:

forming an initial wet charge of longitudinally extending fiberglass rovings impregnated with resin and having a given cross-sectional area;

advancing said wet charge in the longitudinal direction under a predetermined tension;

continuously placing a plurality of reinforcements in the wet charge at predetermined positions within said cross-sectional area;

forming a final wet charge with a composite matrix whose reinforcement pattern is provided with an angular orientation in the length direction in the range of 0° to ± 90°;

providing a mold cavity having a given cross-sectional area and extending a given length;

advancing the final wet charge of said resin into said mold cavity;

compression molding said final wet charge in said mold cavity while maintaining said final wet charge under tension thereby inhibiting flow of said composite matrix; and,

curing said composite matrix.

9. The product of the process of Claim 8.

10. A machine for making composite fiberglass reinforced plastic components comprising, in combination:

a source of fiberglass rovings comprising a plurality of rovings doffs;

a carding plate having a predetermined pattern of guide holes therein for respectively receiving and guiding the ends of said rovings paid-out from said source into a generally longitudinally extending configuration defining a longitudinal axis and having a cross-section corresponding to said
predetermined pattern;

means located along said axis of said longitudinally
extending rovings for impregnating said rovings with wet resin
to form a charge of composite materials;

a biaxial reinforcement dispenser comprising first
and second rotary members coaxial with said longitudinal
axis, said members being mounted for rotation in respectively
opposite directions, each member having a source of reinforcements thereon and a central opening therein for receiving said
charge, and each member including means for applying said
reinforcements to said charge to form a final charge;

a press mounted along said axis and having a pair of
dies therein which are movable relative to one another in a
direction perpendicular to said axis for receiving said final
charge when said dies are spaced apart;

means for heating said dies when said dies are closed
to cure the portion of said final charge between said dies;

means for moving said press from a first position to
a second position along said axis when said dies are closed;

means for opening said dies when said press is moved
into said second position; and

means for severing the cured portion of said final
charge.

11. The machine according to Claim 10, wherein said
charge is pulled along said axis by the movement of said
press.

12. The machine according to Claim 10, wherein said reinforcements include at least one of a fiberglass roving, a woven cloth, tape, graphite, boron or glass.

13. The machine according to Claim 10, wherein said reinforcements are guided radially inwardly from said rotary members and onto said charge.

14. The machine according to Claim 13, wherein the angular orientation of said reinforcements with respect to said axis varies in accordance with the rotational speed of said rotary members.

15. The machine according to Claim 14, wherein the angular orientation of said reinforcement is variable from 0° to 90°.

16. The machine according to Claim 10, including means located between said source of fiberglass rovings and said reinforcement dispenser for applying a predetermined tension to each of said rovings.

17. The machine according to Claim 16, wherein said means for applying said reinforcements includes means for applying a predetermined tension to said reinforcements.

18. The machine according to Claim 10, including means cooperating with said press for applying a predetermined tension to said portion of said charge when said dies are closing.

19. The machine according to Claim 10, wherein the means for impregnating said rovings includes at least one resin bath for receiving said longitudinally extending rovings.

0123225

20.  The machine according to Claim 19, including bushings between said resin bath and said biaxial reinforcement dispenser for guiding and controlling the cross-sectional configuration of said charge.

21.  A method for making composite fiberglass reinforced plastic components comprising the steps of:

providing a source of fiberglass rovings comprising a plurality of roving  doffs;

receiving and guiding the ends of said rovings paid-out from said source through a carding plate having a predetermined pattern of guide holes therein and into a generally longitudinally extending configuration defining a longitudinal axis and into a cross-section corresponding to said predetermined pattern;

impregnating said rovings with wet resin to form a charge of composite materials;

providing a source of reinforcements on a biaxial reinforcement dispenser comprising first and second rotary members coaxial with said longitudinaly axis, said members being mounted for rotation in respectively opposite directions and each member having a central opening therein for receiving said charge;

applying said reinforcements to said charge to form a final charge;

providing a press mounted along said axis and having a pair of dies therein which are movable relative to one another in a direction perpendicular to said axis for receiving said final charge when said dies are spaced apart;

heating said dies when said dies are closed to cure the portion of said final charge between said dies;

moving said press from a first position to a second position along said axis when said dies are closed;

opening said dies when said press is moved into said second position; and

severing the cured portion of said final charge.

22. The product of the method of Claim 21.

23. A machine for making composite reinforced components comprising, in combination:

a source of fiberglass rovings comprising a plurality of roving doffs;

means for receiving and guiding the ends of said rovings paid-out from said source into a generally longitudinally extending configuration and having a predetermined cross-sectional pattern corresponding to the cross section of said components;

means adjacent to said means for receiving and guiding for impregnating said rovings with wet resin to form a charge of composite materials;

means for advancing said charge along a generally longitudinal axis;

a press mounted along said axis and having a pair of compression molding dies therein which are·movable relative to one another in a direction perpendicular to said axis for receiving said charge when said dies are spaced apart;

means for closing said dies to cure the portion of said charge between said dies;

means for opening said dies; and

means for severing the cured portion of said charge.

24. The machine according to Claim 23, wherein said charge is advanced by pulling said charge along said axis by movement of said press.

25.   The machine according to Claim 23, including means
for applying a predetermined longitudinal tension to said
charge.

26.   The.machine according to Claim 25, including means
for heating said dies.

27.   The machine according to Claim 26, wherein said
dies are heated to approximately 300°F and wherein said press
provides a pressure of approximately 25 tons.

28.   The machine according to Claim 23, including means
for maintaining a predetermined tension on said charge between
said dies when said dies are closing.

29.   The machine according to Claim 28, wherein said
means for maintaining said tension comprises first and second
clamping means respectively located along said axis on opposite
sides of said dies.

30.   The machine according to Claim 29, wherein said
first and second clamping means are movably mounted for
movement toward said source when said dies are closing.

31.   The machine according to Claim 30, wherein said
press is movably mounted with said first clamping means
for movement therewith and wherein said second clamping
means is independently movably mounted for movement toward
said source at a rate which is different than the rate of
movement of said first clamping means.

32. The machine according to Claim 31, wherein said
rate of movement of said second clamping means is greater
than said rate of movement of said first clamping means.

33.   The machine according to Claim 23, wherein said
means for receiving and guiding said rovings includes a
carding plate having a predetermined pattern of guide holes
therein corresponding to said cross section of said components.

0123225

34. A method for producing a high-strength composite structure of resin having reinforcements therein, said method including steps of:

providing a mold cavity having a given cross-sectional area and extending a given length;

placing a plurality of reinforcements in said mold cavity at predetermined positions within said cross-sectional area and extending over said given length;

charging a quantity of wet resin into said reinforcements to complete a charge and form a composite matrix;

applying and maintaining a predetermined tension to said reinforcements in said cavity;

compression molding said charge in said mold cavity; and curing said charge.

35. The method according to Claim 34, wherein said placing step includes the step of forming a composite matrix whose reinforcement pattern is provided with an angular orientation in the length direction in the range of 0° to $\pm$ 90°.

36. The product of the method of Claim 34.

37. The method according to Claim 34, wherein said mold cavity has a curved contour along said given length.

38. The method according to Claim 37, wherein the cross-sectional configuration of said given cross-sectional area varies over said given length.

39. The product of the method of Claim 38.

40. A method for producing a high-strength composite structure of resin having reinforcements therein, said method including steps of:

providing a mold cavity having a given cross-sectional area and extending a given length;

providing a plurality of reinforcements of a length at least equal to said given length;

charging a quantity of wet resin into said reinforcements to complete a charge and forming a composite matrix;

placing said charge in said mold cavity with said plurality of reinforcements at predetermined positions within said cross-sectional area and extending over said given length;

applying and maintaining a predetermined tension to said reinforcements in said cavity;

compression molding said charge in said mold cavity; and

curing said charge.

41.   The method according to Claim 40, wherein said placing step includes the step of forming a composite matrix whose reinforcement pattern is provided with an angular orientation in the length direction in the range of 0° to ± 90°.

42.   The product of the method of Claim 40.

43.   The method according to Claim 40, wherein said mold cavity has a curved contour along said given length.

44.   The method according to Claim 43, wherein the cross-sectional configuration of said given cross-sectional area varies over said given length.

45.   The product of the method of Claim 43.

46.   The method according to Claim 40, including the step of pulling said charge through a die-plate prior to said placing step so that said charge is formed into a predetermined cross-sectional configuration.

47.   The product of the method of Claim 46.

48.   The method according to Claim 40, including the step of wrapping said charge about a mandrel prior to said placing step.

11

2

FIG.1

10

12

14        14

10

FIG.2

12

10

FIG.3

1/6

0123225

TENSIONING
DEVICE

PRESSURE
SPRINGS

FIG.4d

FIG.4

FIG.4a

FIG.4b

FIG.4c

FIG.5a

FIG.5b

FIG.6

0123225

0123225

| DOFF CREELS | RESIN IMPREGNATION | WRAPPING | PRESS CLOSE | PRESS OPEN | CUT OFF |
|---|---|---|---|---|---|

112  R  118  120  126  128  130  140  TOOL

**FIG.7**

FIBRE DIRECTION                                              ROVING CREELS

112

120                                                          RESIN BATH

160    126    128                                            BIAXIAL APPLICATORS

202    200                                                    MAT APPLICATORS
202

                                                             PRESS CLOSE

130                                                          PRESS OPEN

140                                                          CUT OFF

**FIG.8**

| 112 DOFF CREELS | 120, 126 & 128 RESIN IMPREGNATION AND WRAPPING | 130 PRESS CLOSE / PRESS OPEN | 140 CUT-OFF |
|---|---|---|---|
| R ⌐180 LOAD POSITION | NO ACTIVITY | C PRESS RETURN TO CLOSE POSITION | NO ACTIVITY |
| 182 STEP 1 | NO ACTIVITY | 183 PRESS CLOSES AND MOVES TO OPEN | MAT'L INTO CUT-OFF |
| R STEP 2 184 | NEW CHARGE SET-UP | C CLAMP 183 PRESS OPENS AND PRESS MOVES TO CLOSE | CUT-OFF START UP MAT'L |
| R 183 STEP 3 186 | NO ACTIVITY | 187 PRESS CLOSES | NO ACTIVITY |
| R STEP 4 188 | NEW CHARGE SET-UP | C PRESS MOVES TO OPEN POSITION | 190 CUT-OFF PART |

FIG.9

0123225

FIG.11

FIG.10

FIG.12a

FIG.12b

| | DOCUMENTS CONSIDERED TO BE RELEVANT | | EP 84104139.5 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| Y | GB - A - 2 101 033 (LAADER BERG) <br> * Totality * | 1-26 | B 29 D 3/02 |
| A | | 28,33 | |
| | -- | | |
| Y | GB - A - 2 064 413 (VEB KOMBINAT SPORTGERATE) <br> * Totality * | 1-26 | |
| | -- | | |
| X | US - A - 3 543 335 (MEYER) <br> * Totality * | 34,37-39 | |
| A | | 35,40, 42-45 | |
| | -- | | |
| A | US - A - 4 318 762 (MEYER) <br> * Totality * | 1,5,8, 10,12, 16,17, 19,21, 23,26 | **TECHNICAL FIELDS SEARCHED (Int. Cl. ³)** |
| | -- | | |
| A | US - A - 3 530 212 (KIENLE) <br> * Totality * | 1,5,8, 10,12, 16,17, 19,21, 23,26 | B 29 C <br> B 29 D <br> B 29 G |
| | -- | | |
| A | US - A - 3 657 040 (SHOBERT) <br> * Totality * | 1,5,8, 10,12, 16,17, 19,21, 23,26 | |
| | -- | | |
| A | US - A - 3 035 630 (HATCH) <br> * Totality * | 1,5,8, 10,18 | |
| | -- | | |

The present search report has been drawn up for all claims

| Place of search | Date of completion of the search | Examiner |
|---|---|---|
| VIENNA | 26-07-1984 | REININGER |

| Category | Citation of document with indication, where appropriate, of relevant passages | Relevant to claim |
|---|---|---|
| | **DOCUMENTS CONSIDERED TO BE RELEVANT** | |
| A | US - A - 4 137 119 (PIOLA)<br>* Totality *<br>-- | 1,4,5,7,8,10-15 |
| A | US - A - 3 537 937 (MEDNEY)<br>* Totality *<br>-- | 1,4,5,7,8,10-15 |
| A | US - A - 3 554 839 (MEDNEY)<br>* Totality *<br>-- | |
| A | US - A - 3 142 598 (ROSEN)<br>* Totality *<br>-- | |
| A | US - A - 2 980 158 (MEYER)<br>* Totality *<br>-- | |
| A | FR - A1 - 2 442 123 (DIFFUSA)<br>* Totality *<br>---- | |

CLASSIFICATION OF THE APPLICATION (Int. Cl.)

TECHNICAL FIELDS SEARCHED (Int. Cl.)

EPO Form 1503.2   06.78